# EUROPÄISCHE PATENTANMELDUNG

(11) **EP 0 861 995 A2**
(43) Veröffentlichungstag der Anmeldung: **02.09.1998**
(21) Anmeldenummer: 98103297.2
(22) Anmeldetag: 25.02.1998
(51) Int. Cl.: F16H 1/32

(54) **Exzentergetriebe mit einstellbarem Zahnspiel**

(30) Priorität: 28.02.1997 DE 29703651 U; 08.04.1997 DE 19714528
(71) Anmelder: Weisz, Harald, D-80638 München (DE)
(72) Erfinder: Weisz, Harald, D-80638 München (DE)
(74) Vertreter: Wunderlich, Rainer, Dipl.-Ing.

(57) **Zusammenfassung**

Das Exzentergetriebe weist eine um eine Drehachse drehbare Antriebswelle (3) auf, durch welche ein Planet (4) mit mindestens einem Verzahnungsbereich (17,18) angetrieben wird. Der Planet ist auf einem Exzenterabschnitt (6) der Antriebswelle (3) drehbar um eine Exzenterachse (14) gelagert, die zur Drehachse (15) der Antriebswelle exzentrisch angeordnet ist. Ein Verzahnungsbereich (17) des Planeten kämmt mit einer Drehmomentstütze (3) und ein Abtrieb (5) wird über den Planeten angetrieben. Die einzelnen Verzahnungen sind leicht konisch ausgebildet. Weiterhin ist eine Justiereinrichtung vorgesehen, mit welcher der Verzahnungsbereich des Planeten relativ zu der Drehmomentstütze axial einstellbar ist, so daß eine spielfreie Zahnradpaarung ermöglicht wird.

## Beschreibung

Die Erfindung betrifft ein Exzentergetriebe mit einer um eine Drehachse drehbaren Antriebswelle, einem von der Antriebswelle angetriebenen Planeten, der mindestes einen Verzahnungsbereich aufweist, wobei der Planet auf einem Exzenterabschnitt der Antriebswelle drehbar um eine Exzenterachse gelagert ist, die zur Achse der Antriebswelle exzentrisch angeordnet ist, einer Drehmomentstütze, mit der ein Verzahnungsbereich des Planeten kämmt, und einem Abtrieb, der von dem Planeten angetrieben ist.

Gattungsgemäße Exzentergetriebe gehen beispielsweise aus der WO-A-96/04493 oder der US-A-5,277,672 hervor. Mit derartigen Getrieben können sehr hohe Übersetzungsverhältnisse erzielt werden. Jedoch sind die Verzahnungen solcher Getriebe relativ hohen Belastungen ausgesetzt. Ungenauigkeiten in der Zahnradpaarung, wie Verkantungen oder ein Spiel, können bei Exzentergetrieben zu einem erheblichen Zahnverschleiß und letztendlich zu Zahnbruch führen. Um bei bekannten Exzentergetrieben das Problem des Zahnverschleißes in noch vertretbaren Grenzen zu halten, ist es notwendig, bei der Fertigung des Getriebes sehr enge Maßtoleranzen einzuhalten. Dies führt jedoch zu erheblichen Kosten bei der Herstellung von Exzentergetrieben.

In der US-A-5,277,672 wird vorgeschlagen, das Spiel einer ersten Zahnradpaarung durch eine radial wirkende Federmimik zu reduzieren. Trotz der konstruktiv aufwendigen Federmimik bleibt zumindest eine zweite vorgesehene Zahnradpaarung spielbehaftet.

Aus der DE-C-38 07 87, der US-A-3,640,154 oder der JP-A-57-16842 sind Getriebe bekannt, bei denen auf einer Antriebswelle ein Planet auf einem zylindrischen Wellenabschnitt gelagert ist, der zur Achse der Antriebswelle in einem schrägen Winkel steht. Bei diesen Getrieben bestehen hinsichtlich Herstellbarkeit und Verschleiß dieselben Probleme wie bei den zuvor genannten.

Der Erfindung liegt die **Aufgabe** zugrunde, ein Exzentergetriebe anzugeben, bei welchem bei einer einfachen Herstellbarkeit das Auftreten eines Zahnradverschleißes weitgehend reduziert ist.

Die Aufgabe wird erfindungsgemäß zum einen durch die kennzeichnenden Merkmale des Anspruchs 1 gelöst. Nach der Erfindung ist vorgesehen, daß der Verzahnungsbereich an dem Planeten und die Drehmomentstütze eine zu der Drehachse in einem schrägen Winkel ausgebildete Verzahnung aufweisen und daß eine Justiereinrichtung vorgesehen ist, mit welcher der Verzahnungsbereich des Planeten relativ zur der Drehmomentstütze in einer Richtung im wesentlichen parallel zu der Drehachse der Antriebswelle zur spielfreien Paarung der Verzahnungen einstellbar ist.

Die Verzahnungen können bezüglich der Drehachse leicht kegelig ausgebildet sein, wobei insbesondere eine Beveloid-Verzahnung bevorzugt ist. Die Verzahnungen können mit üblichen Maßtoleranzen gefertigt werden, da mittels der Justiereinrichtung bei der Montage eine paßgenaue Einstellung möglich ist. Mittels der Justiereinrichtung werden die Verzahnungen so axial gegeneinander verstellt, daß die korrespondierend zueinander ausgebildeten Verzahnungen spielfrei aneinander liegen.

Ein besonders zuverlässiger spielfreier Betrieb wird nach einer Ausführungsform der Erfindung dadurch erreicht, daß durch die Justiereinrichtung zwischen dem Verzahnungsbereich des Planeten und der Drehmomentstütze eine Spannkraft erzeugbar ist, durch welche die Verzahnungen axial gegeneinander gedrückt werden. Bei dieser Ausführungsform ist ein dynamischer Spielausgleich gegeben. Ein spielfreier Flankenkontakt der Verzahnungen ist so auch über eine längere Betriebsdauer hin gewährleistet.

Grundsätzlich können zur Erzeugung der axialen Spannkraft beliebige, zur Krafterzeugung bekannte Mittel verwendet werden, beispielsweise Druckzylinder. Erfindungsgemäß ist jedoch bevorzugt, daß die Justiereinrichtung einen Federmechanismus aufweist, der die Spannkraft in axialer Richtung ausübt. Ein Federmechanismus ist hinsichtlich Robustheit und Fertigungskosten vorteilhaft.

Alternativ ist es nach der Erfindung möglich, daß die Justiereinrichtung ein auswechselbares Distanzelement aufweist, durch welches der axiale Abstand der Drehmomentstütze relativ zum Verzahnungsbereich des Planeten einstellbar ist. Bei dem Distanzelement können insbesondere Distanzscheiben zur Anwendung gelangen, die beispielsweise zwischen zwei Gehäuseteilen angeordnet werden. Die Distanzscheiben weisen dabei eine definierte axiale Dicke auf, so daß die korrespondierenden Verzahnungen spielfrei miteinander kämmen. Die Auswahl der richtigen Distanzscheibe kann durch Ausmessen und anschließendes Überprüfen der Zahnradpaarung bei einem montierten Getriebe bestimmt werden.

Die Erfindung wird zum zweiten durch ein Exzentergetriebe mit den kennzeichnenden Merkmalen des Anspruchs 5 gelöst. Bei diesem Exzentergetriebe ist es erfindungsgemäß, daß der Verzahnungsbereich am Planeten und die Drehmomentstütze jeweils eine Verzahnung aufweisen, die axial zu beiden Seiten der Mittenebene des Planeten ausgebildet sind, wobei die Mittenebene durch die axiale Mitte des Planeten und senkrecht zur Drehachse verläuft.

Bei den aus dem Stand der Technik bekannten Exzentergetrieben ist der Kraftfluß asymmetrisch. Durch das angelegte Drehmoment wird am Planeten ein Kippmoment etwa quer zur Drehachse erzeugt. Dies führt aufgrund eines Spieles, welches zumindest in den Lagern vorhanden ist, bei den bekannten Exzentergetrieben zu einem Kippen mit der Folge, daß die Verzahnung an ihren Kanten läuft. Hieraus ergibt sich nicht nur ein hoher Zahnverschleiß, sondern auch eine hohe Belastung der Lager, welche deren Lebensdauer drastisch reduziert.

Bei der erfindungsgemäßen Anordung ergibt sich ein zur Mittenebene des Planeten symmetrischer Kraftfluß, so daß sich auch kein Kippmoment mit den negativen, vorstehend beschriebenen Auswirkungen einstellt.

Bei bestimmten Exzentergetrieben, wie sie bespielsweise bei der Sitzlehnenverstellung von Automobilsitzen verwendet werden, bildet der Planet unmittelbar den Abtrieb, so daß nur ein Verzahnungsbereich am Planeten vorgesehen ist. Erfindungsgemäß ist jedoch bevorzugt, daß an dem Planten zwei Verzahnungsbereiche vorgesehen sind, daß ein erster Verzahnungsbereich des Planeten mit der Drehmomentstütze kämmt und daß ein zweiter Verzahnungsbereich des Planeten mit einer Verzahnung an dem Antriebs kämmt. Für eine symmetrische Ausbildung können die Verzahnungsbereiche zum einen als eine durchgehende Verzahnung ausgebildet sein, welche sich zu beiden Seiten der Mittenebene des Planeten erstreckt. Zum anderen kann jeder Verzahnungsbereich zwei- oder mehrteilig ausgebildet sein, wobei die einzelnen Teile gegenüberliegend auf dem Planeten mit etwa dem gleichen Abstand von der Mittenebene des Planeten angeordnet sind.

Ein kompakter Aufbau des Exzentergetriebes wird nach der Erfindung dadurch erreicht, daß die Antriebswelle als eine Hohlwelle ausgebildet ist, in welcher der Planet gelagert ist, daß der Planet axial länger ausgebildet ist als die Antriebswelle, wobei beide freien Enden des Planeten gegenüber der Antriebswelle axial vorstehen, daß an einer Außenseite der beiden freien Enden Verzahnungsbereiche ausbildet sind, daß der Planet hülsenförmig ausgebildet ist und daß an einer Innenseite des Planeten eine Innenverzahnung vorgesehen ist.

Die beiden Verzahnungsbereiche können als Innen- oder als Außenverzahnung ausgeformt sein. Eine gute Kraftverteilung innerhalb des Planeten wird jedoch dadurch erreicht, daß einer der beiden Verzahnungsbereiche als Innenverzahnung ausgebildet ist, während der andere der beiden Verzahnungsbereiche als Außenverzahnung ausgebildet ist.

Ein robuster Aufbau des Exzentergetriebes wird erfindungsgemäß dadurch gewährleistet, daß der Exzenter als ein Ringelement ausgebildet ist, welches drehbar um die Drehachse der Antriebswelle und relativ zur Antriebswelle gelagert ist und daß eine Übertragungseinrichtung vorgesehen ist, durch welche ein Drehmoment von der Antriebswelle auf das Ringelement übertragbar ist. Je nach Ausführungsform kann das Ringelement am Gehäuse, der Antriebswelle oder der Abtriebswelle drehbar gelagert sein.

Eine gute Drehmomentübertragung auf das Ringelement wird dadurch erreicht, daß die Übertragungseinrichtung mindestens ein Zahnrad aufweist, welches mit einer Verzahnung der Antriebswelle in kämmender Verbindung steht.

Nach einer alternativen Ausführungsform der Erfindung ist vorgesehen, daß die Übertragungseinrichtung einen ringförmigen Körper mit speichenartig angeordneten Übertragungsgliedern an seiner Außenumfangsseite aufweist, daß der ringförmige Körper auf einem zur Drehachse exzentrisch ausgebildeten Zylinderabschnitt der Antriebswelle drehbar gelagert ist und daß die sternartig angeordneten Übertragungsglieder durch Durchbrüche in dem Gehäuse oder des Abtriebs hindurchragen und eine Exzenterbewegung auf den Planeten übertragen. Die einzelnen sternförmig angeordneten Übertragungsglieder können entweder starr mit dem ringförmigen Körper verbunden sein oder als bewegbar gelagerte Wälzkörper ausgebildet werden.

Die Aufgabe wird zum dritten erfindungsgemäß durch ein Exzentergetriebe gelöst, welches die kennzeichnenden Merkmale des Anspruchs 12 aufweist. Dieses Exzentergetriebe ist dadurch gekennzeichnet, daß neben dem einen Planeten ein zweiter Planet vorgesehen ist, der drehbar um eine zweite Exzenterachse gelagert ist, welche parallel zu der ersten Exzenterachse und um 180 Grad versetzt um die Drehachse angeordnet ist, und daß der zweite Planet mit der Drehmomentstütze kämmt und den Abtrieb antreibt.

Durch den zweiten Planeten, welcher um 180 Grad versetzt zu dem ersten Planeten mit annähernd gleicher Masse umläuft, kompensieren sich die durch exzentrisch rotierende Massen bewirkten Kräfte. Somit werden auch bei diesem erfindungsgemäßen Exzentergetriebe die dadurch verursachten Probleme einer hohen Zahnkanten- und Lagerbelastung weitgehend vermieden.

Es ist erfindungsgemäß, daß der zweite Planet als ein Satellit auf dem ersten Planeten drehbar gelagert ist.

Eine Weiterbildung der erfindungsgemäßen Exzentergetriebe kann darin gesehen werden, daß eine Unwuchtmasse angeordnet ist. Hierdurch können die exzentrisch umlaufenden Massen ausgeglichen und so Vibrationen beim Betrieb vermieden werden. Die Unwuchtmassen sind insbesondere so ausgebildet, daß in ihnen Wuchtbohrungen eingebracht werden können.

Bei einer besonders kompakten Ausführungsform ist es vorgesehen, daß der Exzenterabschnitt einen zylindrischen Exzenterkörper aufweist, dessen Exzenterachse parallel und radial versetzt zur Achse der Antriebswelle ist. Die Exzentrizität, d.h. der Versatz zwischen Exzenterachse und der Achse der Antriebswelle, ist kleiner als der Radius des Planeten.

Bei einer anderen Ausführungsform der Erfindung wird die Exzentrizität dadurch erreicht, daß der Exzenterabschnitt ein zylindrischer Exzenterkörper ist, dessen Exzenterachse zur Achse der Antriebswelle angewinkelt ist.

Eine weitere Möglichkeit zur Ausbildung der Exzentergetriebe besteht darin, daß der Exzenterabschnitt eine Exzenterwelle ist, die im wesentlichen rechtwinkelig zur Antriebswelle angeordnet und an dieser drehbar gelagert ist, daß die Exzenterwelle zwei Abschnitte aufweist, die sich mit unterschiedlicher Länge zu gegenüberliegenden Seiten der Antriebswelle erstrecken, und daß am jeweiligen freien Ende des Abschnitts der Exzenterwelle ein Kegelrad als erster und zweiter Verzahnungsbereich angeordnet sind. Die Verzahnungsbereiche des Planeten und die Drehmomentstütze sowie die Verzahnung der Abtriebswelle bilden dabei eine Kegelradkombination.

Zur Erreichung eines hohen Untersetzungsverhältnisses ist es vorteilhaft, daß die Drehmomentstütze eine Verzahnung mit einer Zähnezahl aufweist, welche sich von der Zähnezahl des ersten Verzahnungsbereichs des Planeten nur um wenige Zähne unterscheidet. Insbesondere ist der Unterschied der Zähnezahlen eins.

Zur Erreichung eines hohen Untersetzungsverhältnisses ist es weiterhin vorgesehen, daß die Abtriebswelle eine Verzahnung aufweist, die mit dem zweiten Verzahnungsbereich des Planeten kämmt, und daß die Verzahnung der Abtriebswelle eine Zähnezahl aufweist, die größer als die Zähnezahl der Verzahnung der Drehmomentstütze ist. Der Unterschied der beiden Zähnezahlen ist dabei insbesondere eins.

Der erste und zweite Verzahnungsbereich des Planeten können grundsätzlich unterschiedlich ausgebildet werden, d.h. mit verschiedenen Zähnezahlen und mit unterschiedlichen Modulen. Unter fertigungstechnischen Gesichtspunkten ist es jedoch vorteilhaft, daß der erste und der zweite Verzahnungsbereich auf dem Planeten gleich ausgebildet sind.

Gemäß einer Weiterbildung der Erfindung ist es vorgesehen, daß der Planet eine Außen- und eine Innenverzahnung als erster bzw. zweiter Verzahnungsbereich aufweist. Mit dieser Anordnung, bei der die beiden Verzahnungsbereiche radial versetzt zueinander liegen können, wird eine besonders kompakte Getriebeanordnung erreicht, wie sie beispeilsweise für die Mikromechanik wünschenswert ist.

Eine weitere erfindungsgemäße Ausführungsform besteht darin, daß der Planet einen zusätzlichen, dritten Verzahnungsbereich aufweist. Dieser weitere Verzahnungsbereich kann mit der Verzahnung einer weiteren Abtriebswelle kämmen, so daß zwei verschiedene Abtriebsdrehzahlen am Getriebeausgang abgegriffen werden können. Auch können noch weitere Verzahnungsbereiche am Planeten vorgesehen werden, so daß mehrere Abriebsdrehzahlen am Getriebeausgang vorliegen. Eine Veränderung des Übersetzungsverhältnisses wird auch dadurch erreicht, daß eine Schalteinrichtung zum Umschalten zwischen den einzelnen Verzahnungsbereichen und den Verzahnungen vorgesehen ist.

Bei einer Weiterbildung des Exzentergetriebes ist es zudem bevorzugt, daß die Drehmomentstütze zur Veränderung der Abtriebsdrehzahl drehbar ist. Hierdurch kann eine Feineinstellung der Abtriebsdrehzahl erreicht werden, was beispielsweise beim Antrieb von Aufzügen angestrebt wird.

Die Erfindung wird anhand von Ausführungsbeispielen weiter erläutert, welche schematisch in den Zeichnungen gezeigt sind. In den Zeichnungen zeigen:
- Fig. 1: eine Teilquerschnittsansicht durch ein Exzentergetriebe gemäß dem ersten Aspekt der Erfindung;
- Fig. 2: eine Teilvorderansicht des Exzentergetriebes von Fig. 1;
- Fig. 3: eine Teilquerschnittsansicht eines weiteren Exzentergetriebes nach dem ersten Aspekt der Erfindung;
- Fig. 4: eine Teilvorderansicht des Exzentergetriebes von Fig. 3;
- Fig. 5: eine vergrößerte Detailansicht der Verzahnung des Exzentergetriebes von Fig. 3;
- Fig. 6: eine Teilquerschnittsansicht durch ein Exzentergetriebe mit einem Federmechanismus gemäß dem ersten Aspekt der Erfindung;
- Fig. 7: eine Teilquerschnittsansicht durch ein anderes Exzentergetriebe mit einem Federmechanismus gemäß dem ersten Aspekt der Erfindung;
- Fig. 8: eine Teilquerschnittsansicht eines erfindungsgemäßen Exzentergetriebes mit einem angewinkelten Exzenterabschnitt;
- Fig. 9: eine Teilquerschnittsansicht durch ein anderes erfindungsgemäßes Exzentergetriebes mit einem angewinkelten Exzenterabschnitt;
- Fig. 10: eine Teilquerschnittsansicht eines anderen erfindungsgemäßen Exzentergetriebes mit einem angewinkelten Exzenterabschnitt;
- Fig. 11: eine Teilquerschnittsansicht durch ein Exzentergetriebe mit Schalteinrichtung;
- Fig. 12: eine Querschnittsansicht durch eine weitere Ausführungsform eines Exzentergetriebes nach dem ersten Aspekt der Erfindung;
- Fig. 13: eine Teilquerschnittsansicht durch ein Exzentergetriebe gemäß dem zweiten Aspekt der Erfindung;
- Fig. 14: eine schematische Darstellung einer Übertragungseinrichtung des Getriebes von Fig. 13;
- Fig. 15: eine schematische Darstellung einer alternativen Übertragungseinrichtung zu dem Exzentergetriebe von Fig. 13;
- Fig. 16: eine Querschnittsansicht eines weiteren Exzentergetriebes nach dem zweiten Aspekt der Erfindung;
- Fig. 17: eine Querschnittsansicht des Exzentergetriebes von Fig. 16 in einem Schnitt senkrecht zur Zeichnungsebene von Fig. 16;
- Fig. 18: eine Querschnittsansicht durch ein Exzentergetriebe gemäß dem zweiten Aspekt der Erfindung mit Exzenterbohrung in der Antriebswelle und einem vorgeschalteten Kegelradgetriebe;
- Fig. 19: eine Querschnittsansicht durch ein weiteres erfindungsgemäßes Getriebe mit Exzenterbohrung;
- Fig. 20: eine Querschnittsansicht eines Exzentergetriebes gemäß dem zweiten Aspekt der Erfindung mit einer mit Zahnrädern versehenen Übertragungseinrichtung;
- Fig. 21: eine Querschnittsansicht eines weiteren erfindungsgemäßen Exzentergetriebes mit einem ringförmigen Körper als Übertragungseinrichtung;
- Fig. 22: eine Detailansicht eines erfindungsgemäßen Exzentergetriebes zur Verdeutlichung der Verzahnung;
- Fig. 23: eine Teilquerschnittsansicht eines Exzentergetriebes gemäß dem zweiten Aspekt der Erfindung mit Wälzkörpern als Übertragungseinrichtung;
- Fig. 24: eine Teilquerschnittsansicht einer weiteren Ausführungsform eines erfindungsgemäßen Exzentergetriebes mit Wälzkörpern als Übertragungseinrichtung;
- Fig. 25: eine Querschnittsansicht durch das Exzentergetriebe von Fig. 24 mit einem Schnitt senkrecht zur Zeichnungsebene von Fig. 24;
- Fig. 26: eine Teilquerschnittsansicht eines Exzentergetriebes gemäß dem dritten Aspekt der Erfindung;
- Fig. 27: eine Querschnittsansicht durch eine andere Ausführungsform eines Exzentergetriebes nach dem dritten Aspekt der Erfindung;
- Fig. 28: eine Seitenansicht eines ringförmigen Mittenteils des ersten Planeten des erfindungsgemäßen Exzentergetriebes von Fig. 27;
- Fig. 29: eine Vorderansicht des ringförmigen Mittenteils von Fig. 28; und
- Fig. 30: eine perspektivische Ansicht des ringförmigen Mittenteils von Fig. 28;

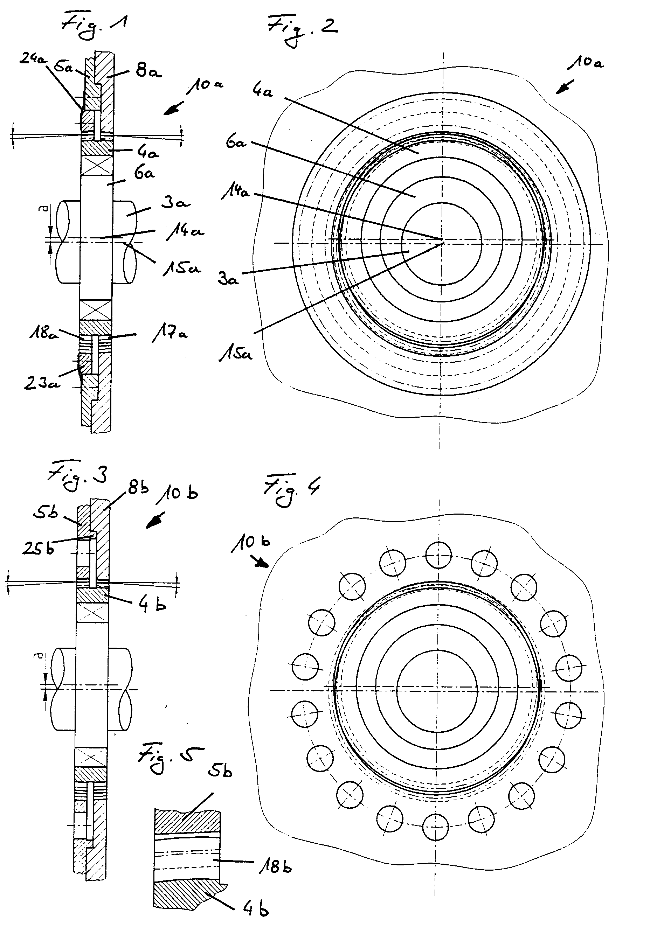

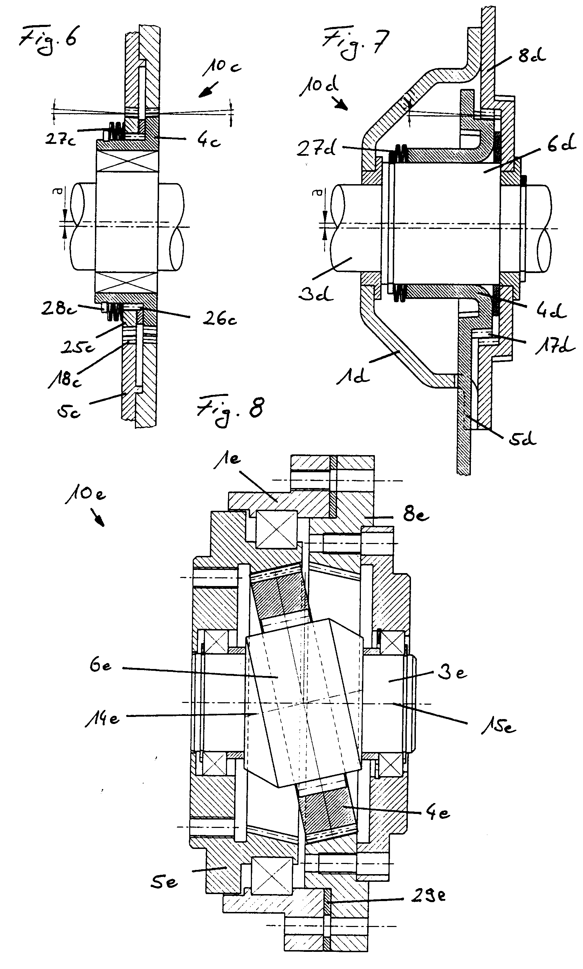

In den Figuren 1 und 2 ist ein erstes erfindungsgemäßes Exzentergetriebe 10a mit einer Antriebswelle 3a gezeigt. Ein zylindrischer Exzenter 6a, dessen Exzenterachse 14a parallel und um einen Betrag a versetzt zu einer Drehachse 15a der Antriebswelle 3a verläuft, ist auf der Antriebswelle 3 vorgesehen. Auf dem Exzenter 6a ist ein Planet 4a drehbar gelagert, welcher einen ersten Verzahnungsbereich 17a und einen zweiten Verzahnungsbereich 18a aufweist.

Die Verzahnungen der beiden Verzahnungsbereiche 17a, 18a sind konisch zur Drehachse des Planeten ausgebildet, wobei ein Konuswinkel der beiden Verzahnungen sich zu der Mitte des Planeten 4a hin öffnet.

Der erste Verzahnungsbereich 17a kämmt mit einer entsprechend ausgebildeten Verzahnung einer Drehmomentstütze 8a, welche an einem nicht dargestellten Gehäusekörper befestigt ist. Der zweite Verzahnungsbereich 18a des Planeten 4a treibt einen Antrieb 5a an, welcher als Welle ausgebildet und gegenüber der Drehmomentstütze 8a drehbar gelagert ist.

Um eine spielfreie Zahnradpaarung zu erreichen, ist eine Justiereinrichtung vorgesehen. Hierzu ist die Verzahnung des Abtriebs 5a auf einem Verzahnungskörper 23a ausgebildet, welcher an dem Abtrieb 5a angebracht und relativ zu diesem axial bewegbar ist. Mittels eines ringförmigen Federblechs 24a wird eine axiale Spannkraft auf den Verzahnungskörper 23a ausgeübt. Das Federblech 24a drückt zu jedem Zeitpunkt die leicht konisch ausgebildete Verzahnung auf dem Verzahnungskörper 23a gegen die entsprechend konisch ausgebildete Verzahnung des zweiten Verzahnungsbereiches 18a des Planeten 4a. Durch diese axiale Spannkraft wird wiederum der Planet 4a mit seinem ersten Verzahnungsbereich 17a an die Verzahnung der Drehmomentstütze 8a gedrückt, wodurch ein Spiel an den beiden Zahnradpaarungen ausgeglichen wird.

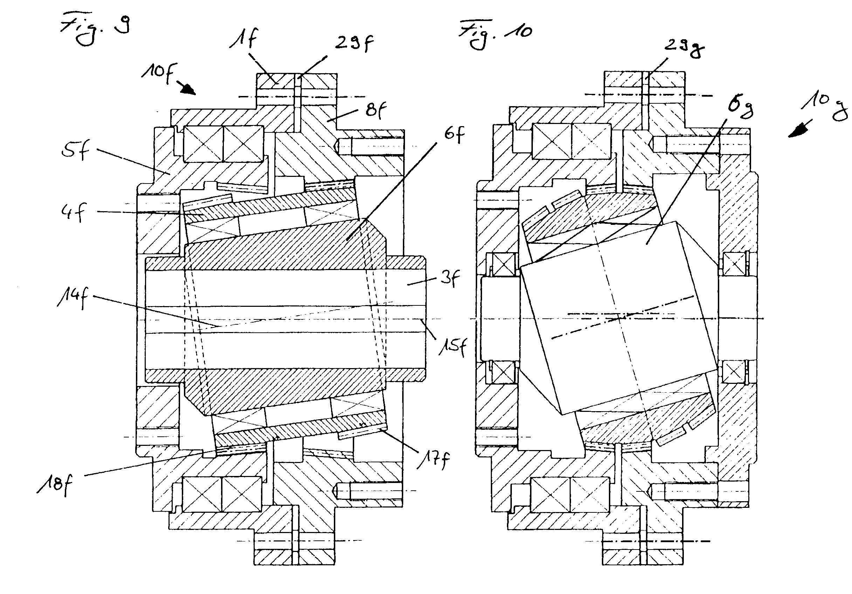

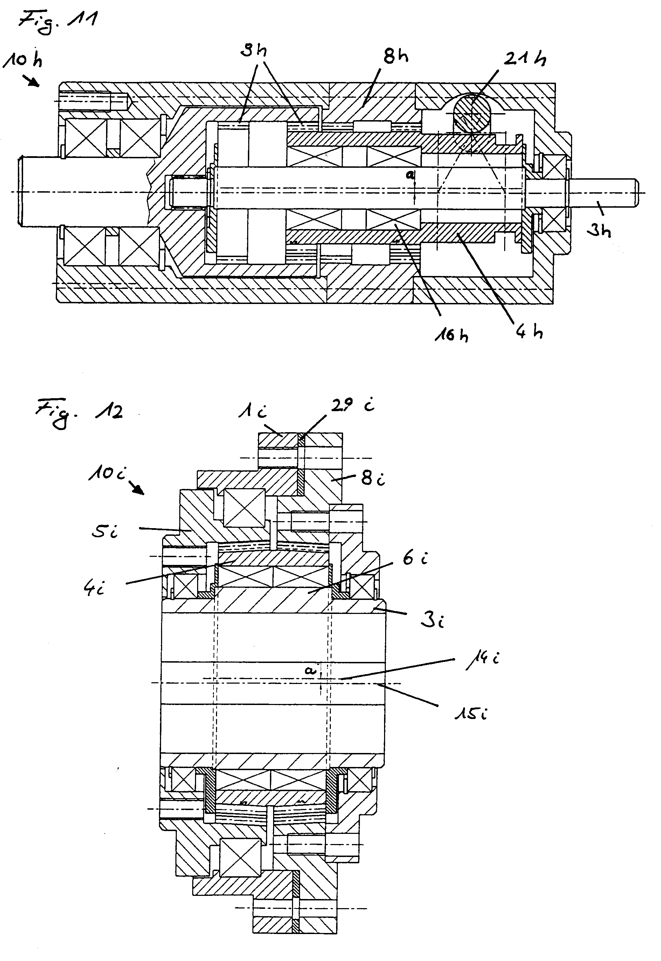

In den Figuren 3 bis 5 ist ein weiteres erfindungsgemäßes Exzentergetriebe 10b dargestellt, welches im wesentlichen denselben Aufbau wie das zuvor beschriebene Exzentergetriebe 10a aufweist. Unterschiedlich zu dem vorausgehend beschriebenen Exzentergetriebe 10a ist jedoch an dem Abtrieb 5b die Verzahnung direkt ausgebildet. Der Abtrieb 5b weist einen ringförmigen Absatz 25b auf, welcher sich gegen die Drehmomentstütze 8b abstützt. Die Form sowie die Elastizität des Abtriebs 5b sind dabei so aufeinander abgestimmt, daß eine Biegespannung in axialer Richtung auf den Planeten 4b ausgeübt wird, wobei die so erzeugte Spannkraft in Richtung der Drehmomentstütze 8b wirkt. Auf diese Weise wird ein vergleichbarer Spielausgleich erreicht, wie er bei dem zuvor beschriebenen Exzentergetriebe 10a bewirkt wird.

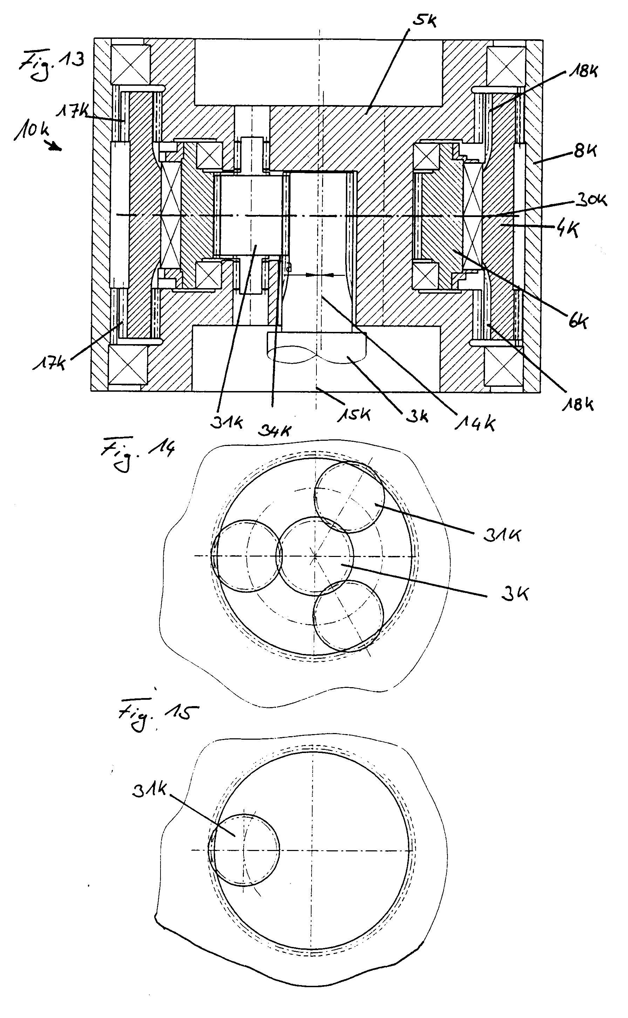

Aus der vergrößerten Detailansicht gemäß Figur 5 ist ersichtlich, daß die Verzahnung des zweiten Verzahnungsbereichs 18b an dem Planeten 4b zur Verbesserung des Spielausgleichs ballig oder bogenförmig ausgebildet ist.

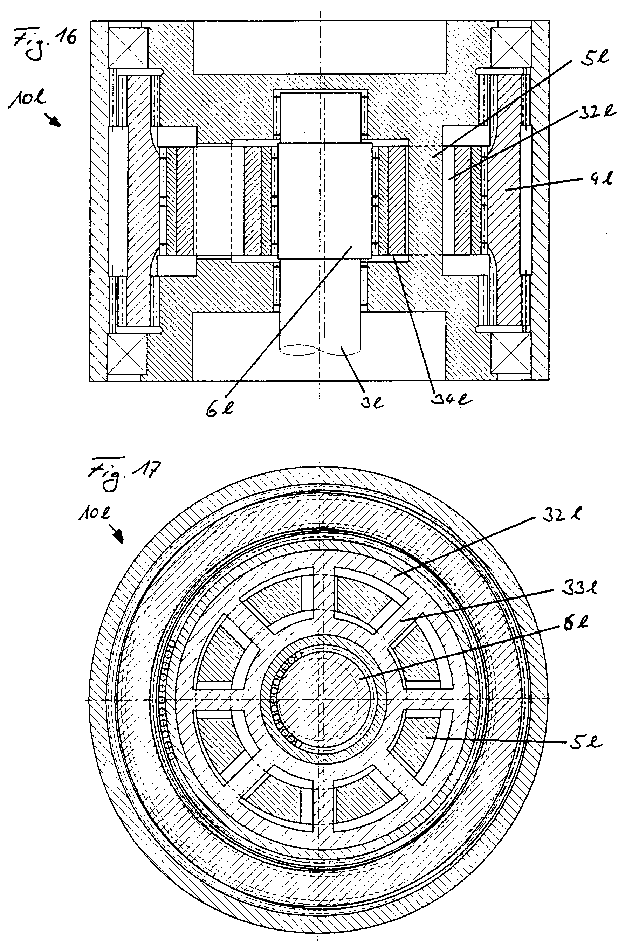

In Figur 6 ist ein erfindungsgemäßes Exzentergetriebe 10c dargestellt, bei welchem eine Justiereinrichtung zum Spielausgleich auf einem Planeten 4c direkt angeordnet ist. Ein Verzahnungskörper 25c ist am Außenumfang des Planeten 4c entlang einer Keilprofilführung 26c axial verschiebbar ausgebildet. Zum Aufbringen einer Spannkraft, welche den ringförmigen Verzahnungskörper 25c mit seiner Außenverzahnung gegen die Verzahnung an einem zweiten Verzahnungsbereich 18c des Abtriebs 5c drückt, ist ein Federmechanismus angeordnet. Der vorgesehene Federmechanismus weist eine Anordnung aus Tellerfedern 27c auf, welche sich einerseits gegen den Verzahnungskörper 25c und andererseits gegen ein ringförmiges Stützelement 28c abstützen, welches an dem Planeten 4c angebracht ist.

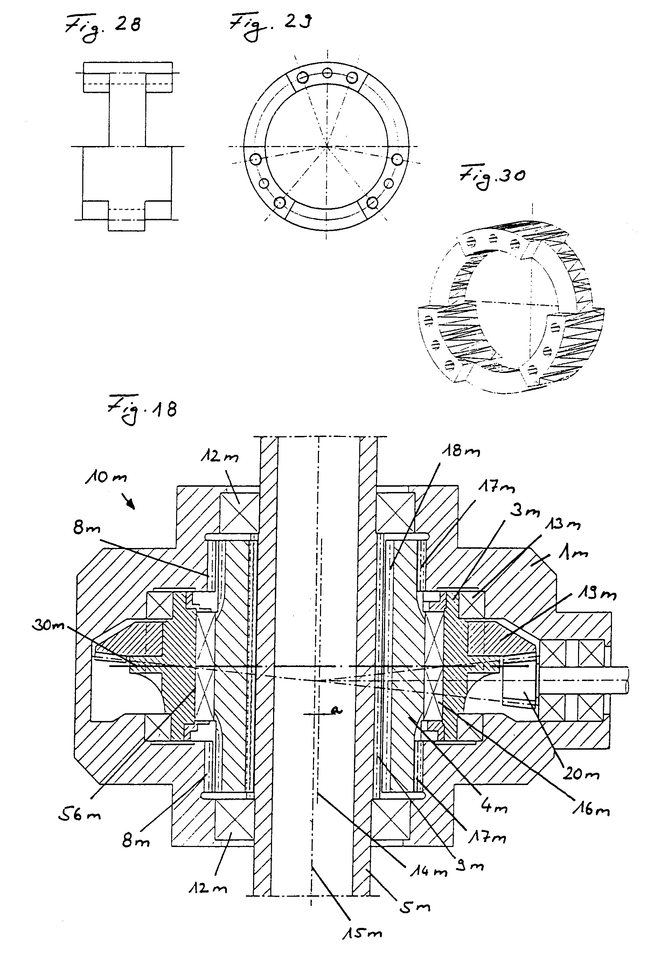

Die Figur 7 zeigt ein weiteres erfindungsgemäßen Exzentergetriebe 10d, bei welchem der Abtrieb 5d fest mit einem Planeten 4d verbunden ist. Der Planet 4d weist lediglich einen ersten Verzahnungsbereich 17d auf, welcher mit einer Verzahnung einer Drehmomentstütze 8d in kämmender Verbindung steht. Bei dem Exzentergetriebe 10d entfällt gegenüber den vorstehend beschriebenen Getrieben eine Übersetzungsstufe. Ein derartiges Getriebe ist insbesondere zum Verschwenken einer Sitzlehne eines Autositzes einsetzbar, wobei der Drehwinkel des Abtriebes 5d durch ein Gehäuse 1d begrenzt ist. Die Verzahnung am ersten Verzahnungsbereich 17d ist mit einer leicht kegeligen Verzahnung, insbesondere einer Beveloid-Verzahnung versehen, in die mit dem gleichen Winkel eine kegelige Verzahnung der Drehmomentstütze 8d eingreift.

Der erste Verzahnungbereich 17d ist an dem Planeten 4d an einem etwa halbkreisförmig gebogenen Randflansch angeordnet, wobei sich durch diese Form eine gewisse Elastizität einstellt. Zusammen mit einer Anordnung aus Tellerfedern 27d, welche auf dem Exzenter 6d angeordnet sind, wird so eine Spannkraft erzeugt, welche die Verzahnungen spielfrei aneinander drückt.

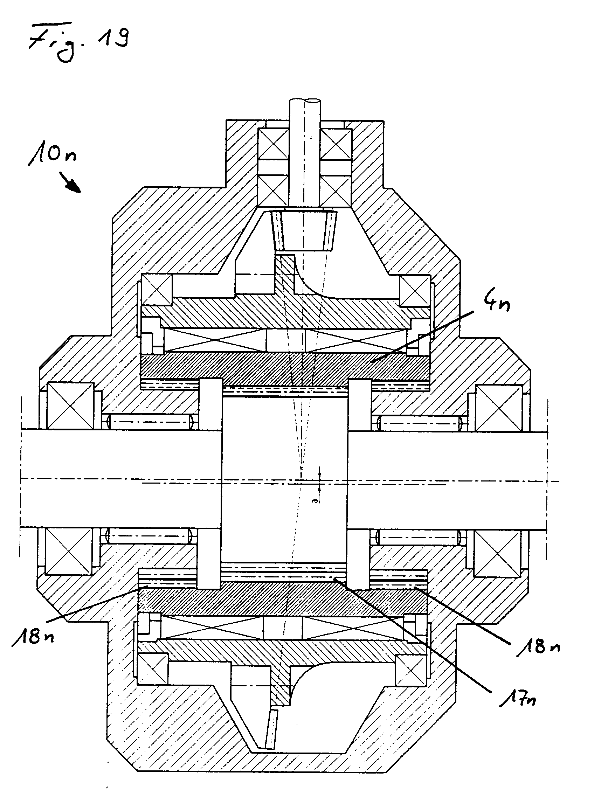

Ein weiteres Exzentergetriebe 10e gemäß dem ersten Aspekt der Erfindung ist in Figur 8 gezeigt. Auf einer Antriebswelle 3e ist ein zylindrischer Exzenter 6e vorgesehen, dessen Exzenterachse 14e in einem spitzen Winkel zu einer Drehachse 15e der Antriebwelle 3e gerichtet ist. Auf dem Exzenter 6e ist ein Planet mit einem einzelnen ersten Verzahnungsbereich 17e angeordnet, dessen gerade Verzahnung aufgrund der Schrägstellung der Exzenterachse 14e zu der Drehachse 15e der Antriebswelle 3e in einem Winkel steht.

Korrespondierende Verzahnungen an einer Drehmomentstütze 8e und einem Abtrieb 5e sind so angeordnet, daß der erste Verzahnungsbereich 17e des Planeten 4e einerseits mit der Verzahnung der Drehmomentstütze 8e und andererseits mit der Verzahnung des Abtriebes 5e kämmt. Der Abtrieb 5e, welcher eine Abtriebswelle ist, ist an einem Gehäuse 1e drehbar gelagert.

Für ein spielfreies Einstellen der beiden Zahnradpaarungen ist eine Justiereinrichtung vorgesehen, welche eine Distanzscheibe 29e mit einer definierten axialen Dicke aufweist. Die Distanzscheibe 29e ist zwischen der Drehmomentstütze 8e und dem Teil des Gehäuses 1e angeordnet, an welchem der Abtrieb 5e gelagert ist. Durch eine entsprechende Wahl der Dicke der Distanzscheibe 29e kann im Zusammenspiel mit den schräg angeordneten Verzahnungen ein Zahnflankenspiel nahezu beseitigt werden.

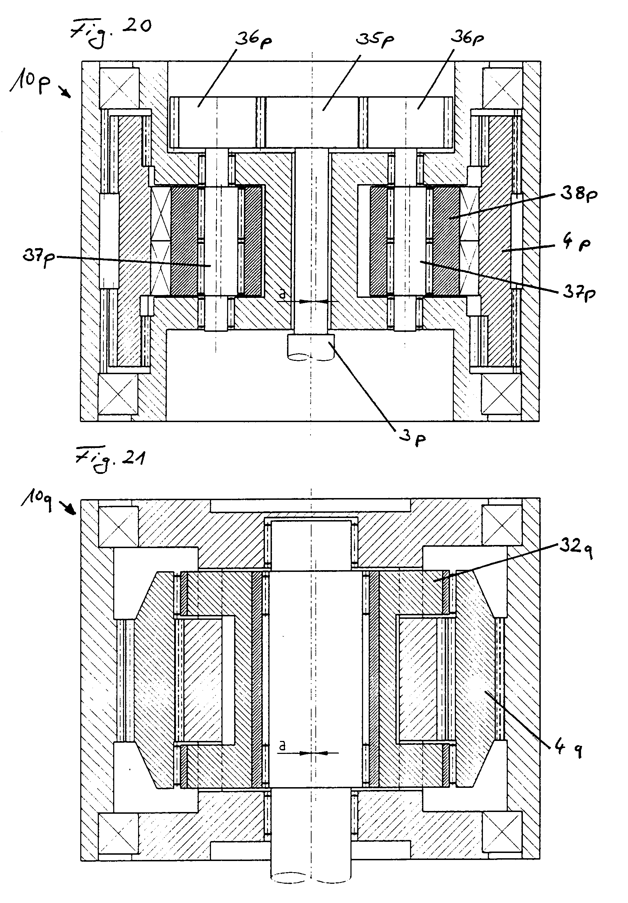

Ein weiteres erfindungsgemäßes Exzentergetriebe 10f ist in Figur 9 dargestellt. Bei dem Exzentergetriebe 10f ist ein Exzenterabschnitt ebenfalls als ein zylindrischer Exzenterkörper 6f ausgebildet, desses Exzenterachse 14f gegenüber einer Drehachse 15f der Antriebswelle 3f angewinkelt ist. Dabei sind die Zahneingriffe zwischen einem ersten Verzahnungsbereich 17f und einer Drehmomentstütze 8f sowie einem zweiten Verzahnungsbereich 18f und einer Verzahnung eines Abtriebs 5f an gegenüberliegenden Stellen des Planeten 4f angeordnet. Ein Spielausgleich erfolgt wie bei dem Exzentergetriebe 10e von Figur 8 mittels einer Distanzscheibe 29f, welche zwischen der Drehmomentstütze 8f und einem mit dem Abtrieb 5f in Verbindung stehenden Teils des Gehäuses 1f angeorordnet ist.

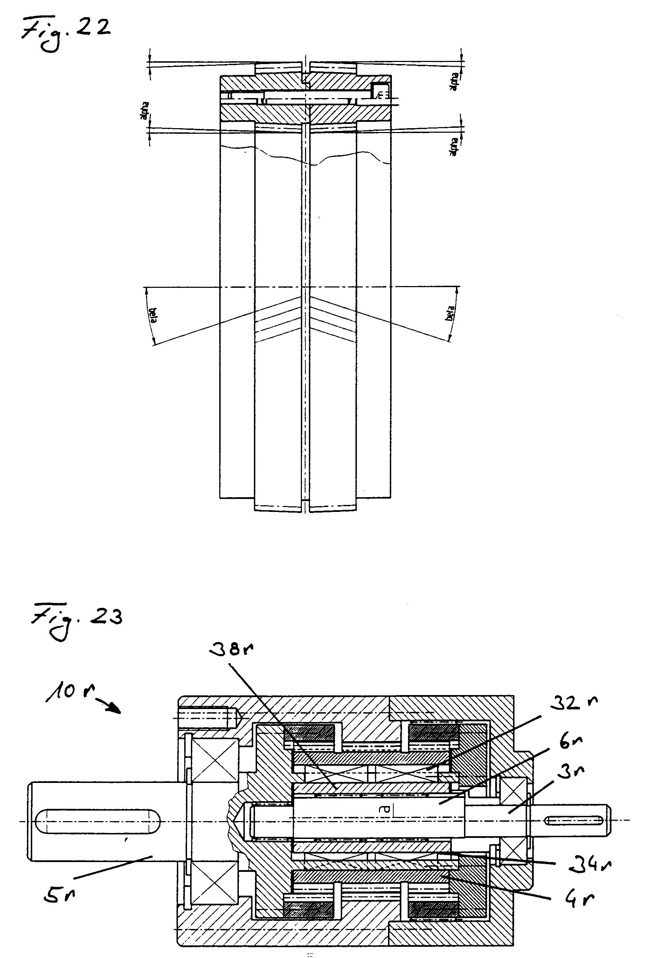

Zur Verbesserung der Übertragungskraft können an einem gewinkelten Exzenter 6g eines Exzentergetriebes 10g gemäß Figur 10 auch mehrere Verzahnungsbereiche vorgesehen sein, die mit entsprechenden Verzahnungen an der Drehmomentstütze und der Abtriebswelle kämmen. Der Ausgleich eines Zahnspieles ist entsprechend dem Exzentergetriebe 10f von Figur 9 mittels einer Distanzscheibe 29g gelöst.

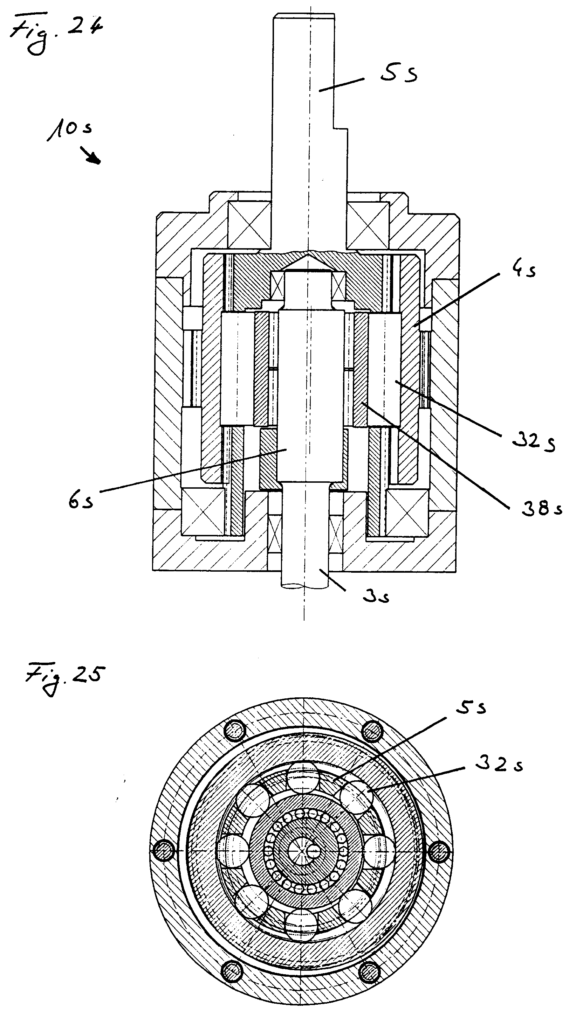

Die prinzipielle Anordnung einer Schalteinrichtung 21h zur Veränderung des Übersetzungsverhältnisses bei einem Exzentergetriebe 10h ist in Figur 11 dargestellt. Bei diesem Exzentergetriebe 10h ist ein Planet 4h über Radial- und Axiallager 16h auf einem Exzenterabschnitt einer Antriebswelle 3h dreh- und verschiebbar gelagert. Durch eine Verschiebung des Planeten 4h mittels der Schalteinrichtung 21h kommen der erste und zweite Verzahnungsbereich des Planeten 4h jeweils mit einer weiteren Verzahnung 9h an der Abtriebswelle bzw. der Drehmomentstütze 8h in Verbindung.

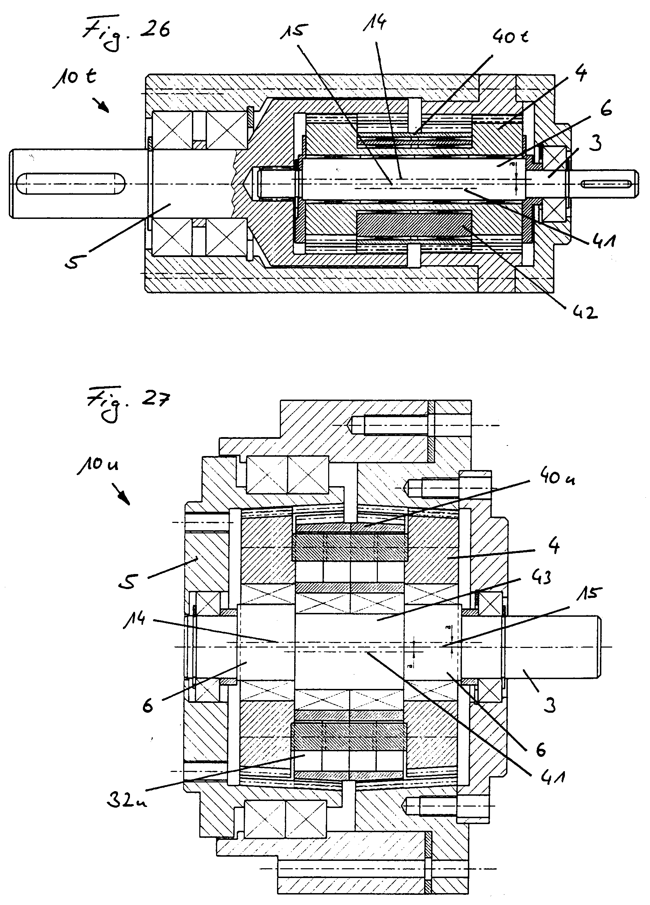

In Figur 12 ist ein weiteres erfindungsgemäßes Exzentergetriebe 10i gezeigt, welches im wesentlichen dem Exzentergetriebe 10f von Figur 9 entspricht. Im Gegensatz dazu ist eine Exzenterachse 14i eines zylindrischen Exzenters 6i parallel und versetzt zu einer Drehachse 15i der Antriebswelle 3i angeordnet. Ein Planet 4i ist doppelkegelstumpfförmig mit entsprechend angewinkelten Verzahnungsbereichen ausgebildet. Bei dieser Verzahnungsausbildung ist es möglich, eine Distanzscheibe 29i zwischen einer Drehmomentstütze 8i und einem Teil des Gehäuses 8i anzuordnen, an welchem die Abtriebswelle drehbar gelagert ist. Durch eine entsprechend ausgebildete Distanzscheibe 29i kann ein gewünschtes Spiel des Getriebes eingestellt werden.

Ein Exzentergetriebe 10k, welches gemäß dem zweiten Aspekt der Erfindung ausgebildet ist, kann Figur 13 entnommen werden. Um einen zu einer Mittenebene 30k eines Planeten 4k symmetrischen Kraftfluß zu erreichen, ragt eine Antriebswelle 3k in eine Öffnung einer Abtriebswelle 5k. An einer Außenseite der Antriebswelle 5k ist ein ringförmiger Exzenter 6k drehbar um eine Drehachse 15k der Antriebswelle 3k gelagert. Die zylindrische Außenumfangsseite des ringförmigen Exzenters 6k weist eine Zylinderfläche auf, welche zu einer Exzenterachse 14k symmetrisch ist, die parallel und radial versetzt zu der Drehachse 15k der Antriebswelle 3k verläuft.

Zur Übertragung eines Drehmoments von der Antriebswelle 3k auf den drehbar gelagerten Exzenter 6k ist eine Übertragungseinrichtung 34k vorgesehen. Bei dem Exzentergetriebe 10k ist hierzu in dem Abtrieb 5k ein Zahnrad 31k drehbar gelagert, welches einerseits mit einer Außenverzahnung an der Antriebswelle 3k und andererseits mit einer Verzahnung an einer Innenseite des ringförmigen Exzenters 6k kämmt. Mittels der Übertragungseinrichtung 34k wird der Exzenter 6k in Rotation versetzt, auf welchem ein Planet 4k drehbar gelagert ist.

Da durch die erfindungsgemäße Anordnung der Planet 4k radial außerhalb der Antriebswelle 3k und des Abtriebes 5k angeordnet ist, können einer erster Verzahnungsbereich 17k und ein zweiter Verzahnungsbereich 18k symmetrisch zu der Mittenachse 30k des Planeten 4k ausgebildet werden. Durch diese symmetrische Ausbildung der Verzahnungsbereiche, welche im vorliegenden Fall jeweils zweiteilig an den freien Enden des hülsenförmigen Planeten 4k ausgeführt sind, wird ein Verkippen des Planeten 4k und somit ein verschleißbehafteter Kantenlauf der Verzahnungen weitgehend vermieden.

In Figur 14 ist schematisch verdeutlicht, daß die Übertragungseinrichtung 30k beispielsweise drei um 120 Grad zueinander versetzt angeordnete Zahnräder 31k aufweisen kann. Hierbei ist eine gleichmäßige Drehmomentübertragung von der Antriebswelle 3k auf den ringförmigen Exzenter 6k möglich.

Eine vereinfachte Ausführung ist in Figur 15 gezeigt, bei welcher lediglich ein Zahnrad 31k zur Drehmomentübertragung vorgesehen ist.

Bei den Exzentergetrieben gemäß den Figuren 13 bis 15 hat der Planet 4k jeweils zwei gleich ausgebildete Außen- und Innenverzahnungen. Die Innenverzahnungen greifen in entsprechende Verzahnungen an dem Abtrieb 5k ein, während die Außenverzahnungen in entsprechende Verzahnungen an einer Drehmomentstütze 8k eingreifen. An der Verzahnung des Abtriebs 5k befindet sich die Zähnezahl Z1, am Planeten 4k die Innenverzahnung mit Z2 sowie die Außenverzahnung mit Z3 und an der Drehmomentstütze die Verzahnung mit der Zähnezahl Z4. Durch eine geringe Zähnezahldifferenz zwischen Z2 und Z1 sowie Z4 und Z3 ergibt sich ein relativ hohes Untersetzungsverhältnis.

Selbstverständlich kann das vorstehend beschriebene Exzentergetriebe 10k auch so betrieben werden, daß das als Abtrieb 5k beschriebene Teil starr mit dem Gehäuse verbunden ist, während das hülsenförmige äußere Bauteil als Abtrieb dient.

Ein weiteres erfindungsgemäßes Exzentergetriebe 10l für eine symmetrische Kraftübertragung ist in Figur 16 dargestellt. Der Aufbau entspricht im wesentlichen dem Exzentergetriebe 10k von Figur 13, wobei jedoch eine veränderte Übertragungseinrichtung 34l vorgesehen ist, um eine Exzenterbewegung von einer Antriebswelle 3l auf einen Planeten 4l zu übertragen. Auf einen zylindrischen Exzenter 6l der Antriebswelle ist ein ringförmiger Körper 32l mit speichenradförmigem Übertragungsglied 33l drehbar gelagert. Dieser Körper 32l weist zwei ringförmige Abschnitte auf, zwischen den sich in bestimmten Abständen sternförmig angeordnete Speichen durch entsprechend ausgebildete Durchbrüche in einem Abtrieb 5l erstrecken, so daß die exzentrische Bewegung durch den Abtrieb 5l radial hindurch auf den Planeten 4l übertragen werden kann. Der Planet 4l ist drehbar auf dem speichenradförmigen Übertragungsglied gelagert. Diese Anordnung erlaubt ebenfalls eine symmetrische Ausbildung der Verzahnungsbereiche an dem Planeten 4l.

In Figur 18 ist ein weiteres erfindungsgemäßes Exzentergetriebe 10m gezeigt, bei dem eine hülsenförmige Antriebswelle 3m in einem Gehäuse 1m drehbar gelagert ist und über ein Kegelrad 19m und ein Antriebsritzel 20m angetrieben wird. Die um die Drehachse 15m drehend gelagerte Antriebswelle 3m weist eine zur Drehachse 15m exzentrisch angeordnete Exzenterbohrung 56m auf. Über Planetenlager 16m ist in der Exzenterbohrung 56m ein hülsenförmiger Planet 4m drehbar gelagert. An seiner Außenseite sind an beiden freien Enden erste Verzahnungsbereiche 17m ausgebildet, welche mit Hohlradverzahnungen der Drehmomentstütze 8m am Gehäuse 1m kämmen. Ein zweiter Verzahnungsbereich 18m ist als eine Innenverzahnung an der Innenseite des hülsenförmigen Planeten 4m durchgehend ausgebildet. Dieser zweite Verzahnungsbereich 18m steht in kämmender Verbindung mit einer Verzahnung 9m auf dem Abtrieb 5m, welche über Abtriebswellenlager 12m in dem Gehäuse drehbar gelagert ist. Durch die symmetrische Anordnung des ersten und zweiten Verzahnungsbereichs 17m bzw. 18m zu einer Mittenebene 30m des Planeten 4m ist eine kippmomentfreie Drehmomentübertragung möglich, so daß sich das Exzentergetriebe 10m insbesondere zur Übertragung hoher Drehmomente eignet.

In Figur 19 ist ein Exzentergetriebe 10n dargestellt, welches ähnlich zu dem Exzentergetriebe 10m von Figur 18 aufgebaut ist. Im Unterschied zu dem Exzentergetriebe 10m weist ein in einer Exzenterbohrung drehbar gelagerter Planet 4n einen ersten Verzahnungsbereich 17n und einen zweiten Verzahnungsbereich 18n auf, deren Verzahnungen als eine Innenverzahnung ausgebildet sind.

In Figur 20 ist ein weiteres erfindungsgemäße Exzentergetriebe 10p dargestellt. Als eine Drehmomentübertragungseinrichtung 34p ist an einer Antriebswelle 3p ein Antriebsritzel 35p vorgesehen, welches zwei Übertragungszahnräder 36p antreibt. Mit den Übertragungszahnrädern 36p ist jeweils ein zylindrischer Exzenterbereich 37p drehfest verbunden, welcher jeweils in einer Bohrung eines Übertragungsringes 38p drehend gelagert ist. Die Exzenterbereiche 37p sind aufeinander abgestimmt so angeordnet, daß eine Exzenterbewegung des Übertragungsringes 38p erzeugt wird, auf welchem drehbar ein Planet 4p mit symmetrisch angeordneten Verzahnungsbereichen gelagert ist.

Ein in Figur 21 dargestelltes, weiteres erfindungsgemäßes Exzentergetriebe 10q weist einen Aufbau auf, welcher mit dem des Exzentergetriebes 10l von Figur 16 vergleichbar ist. Im Gegensatz zu der Ausführungsform von Figur 16 ist ein Übertragungskörper 32q doppelspeichenradförmig ausgebildet. Auf diese Weise kann an einem Planeten 4q eine mittige Innenverzahnung vorgesehen werden.

Ein großer Vorteil der vorstehend beschriebenen Ausführungsformen besteht in der Möglichkeit der Verwendung von Schräg- bzw. V-Verzahnungen, welche schematisch in Figur 22 dargestellt sind. Derartige Verzahnung ermöglichen bei einer guten Kraftübertragung und einem guten Spielausgleich einen relativ geräuscharmen Betrieb.

Bei einer weiteren Ausführungsform eines erfindungsgemäßen Exzentergetriebes 10r gemäß Figur 23 wird vergleichbar zu dem Exzentergetriebe 10q von Figur 21 eine Exzenterbewegung eines Exzenters 6r auf einer Antriebswelle 3r mittels einer Übertragungseinrichtung 34r radial durch einen Abtrieb 5r auf einen Planeten 4r übertragen. Hierzu sind in dem Abtrieb 5r radiale Durchbrüche vorgesehen, in welchen zylindrische Wälzkörper als Übertragungskörper 32r vorgesehen sind. Der Abtrieb 5r bildet somit eine Art Lagerkäfig für die Übertragungskörper 32r, welche zwischen einem auf dem Exzenter 6r drehbar gelagerten Übertragungsring 38r und dem Planeten 4r angeordnet sind.

Ein zu dem Exzentergetriebe 10r von Figur 23 funktionsgleiches, abgewandeltes Exzentergetriebe 10s mit walzenförmigen Übertragungsgliedern 32s ist in den Figuren 24 und 25 veranschaulicht.

In den Figuren 26 und 27 sind Exzentergetriebe 10t und 10u dargestellt, welche entsprechend dem dritten Aspekt der Erfindung ausgebildet sind. Die beiden Exzentergetriebe 10t und 10u weisen, wie ein herkömmliches Exzentergetriebe, jeweils eine Antriebswelle 3 mit einem Exzenter 6, einen Planeten 4 mit zwei Verzahnungsbereichen und einen Abtrieb 5 auf.

Zur weitgehenden Vermeidung einer ungleichmäßigen Belastung bei exzentrisch umlaufenden Massen innerhalb des Getriebes ist erfindungsgemäß ein zweiter Planet auf dem ersten Planeten 4 drehbar und mittig zu einer Mittenebene des ersten Planeten 4 gelagert. Der zweite Planet 40 ist dabei um eine zweite Exzenterachse 41 drehbar, welche um 180 Grad versetzt zu der ersten Exzenterachse 14 des ersten Planeten 4 vorgesehen ist. Somit liegen die beiden Exzenterachsen 14 und 41 sowie eine Drehachse 15 der Antriebswelle 3 in einer Ebene, wobei die beiden Exzenterachsen 14, 41 parallel und in gleichem Abstand zu der Drehachse 15 der Antriebswelle 3 angeordnet sind.

Da auf dem zweiten Planeten 40 zwei Verzahnungsbereiche vorgesehen sind, welche einerseits mit der Drehmomentstütze und andererseits mit dem Abtrieb 5 in kämmender Verbindung stehen, ist aufgrund der um 180 Grad versetzten Anordnung des exzentrisch umlaufenden zweiten Planeten 40 stets ein gegenüberliegender Zahneingriff sowohl an der Drehmomentstütze als auch am Abtrieb sichergestellt. Dies wirkt auch einem Auftreten eines Kippmomentes entgegen.

Bei dem Exzentergetriebe 10t von Figur 26 ist der zweite Planet 40t als ein sogenannter Satellit auf dem ersten Planeten 4 gelagert. Die Exzenterbewegung des Satelliten wird durch einen Exzenterring 42 erzeugt, welcher zwischen dem Planeten 4 und dem Satelliten drehbar gelagert ist.

Bei dem Exzentergetriebe 10u von Figur 27 wird die Exzenterbewegung durch einen zweiten Exzenterabschnitt 43 der Antriebswelle 3 erzeugt, wobei die Exzenterbewegung mittels eines speichenradförmigen Übertragungskörpers 32u durch entsprechend ausgebildete sternförmige Durchbrüche in dem ersten Planeten 4 auf den zweiten Planeten 40u übertragen wird.

In den Figuren 28 bis 30 ist schematisch ein Bauteil verdeutlicht, welches als ein Mittenteil des Planeten 4 mit Durchbrüchen für den speichenradförmigen Übertragungskörper 32u des zweiten Planeten 40u verwendet wird.

Selbstverständlich ist es bei den vorstehend beschriebenen Ausführungsbeispielen in bekannter Weise möglich, Antrieb und Abtrieb sowie die Drehmomentstütze und den Abtrieb in ihrer Funktion zu vertauschen. Weiterhin können die einzelnen erfindungsgemäßen Varianten zur Verminderung des Zahnverschleißes miteinander kombiniert werden, so daß eine weitestgehende Verhinderung von Zahnverschleiß erreichbar ist.

## Patentansprüche

1. Exzentergetriebe mit
- einer um eine Drehachse (15) drehbaren Antriebswelle (3),
- einem von der Antriebswelle (3) angetriebenen Planeten (4), der mindestens einen Verzahnungsbereich (17, 18) aufweist, wobei der Planet (4) auf einem Exzenterabschnitt der Antriebswelle (3) drehbar um eine Exzenterachse (14) gelagert ist, die zur Drehachse (15) der Antriebswelle (3) exzentrisch angeordnet ist,
- einer Drehmomentstütze (8), mit der ein Verzahnungsbereich (17) des Planeten (4) kämmt, und
- einem Abtrieb (5), der von dem Planeten (4) angetrieben ist,
dadurch **gekennzeichnet**,
daß der Verzahnungsbereich (17, 18) an dem Planeten (4) und die Drehmomentstütze (8) eine zu der Drehachse (15) in einem schrägen Winkel ausgebildete Verzahnung aufweisen und
daß eine Justiereinrichtung vorgesehen ist, mit welcher der Verzahnungsbereich (17, 18) des Planeten (4) relativ zu der Drehmomentstütze (8) in einer Richtung im wesentlichen parallel zu der Drehachse (15) zur spielfreien Paarung der Verzahnungen verstellbar ist.

2. Exzentergetriebe nach Anspruch 1,
dadurch **gekennzeichnet**,
daß durch die Justiereinrichtung zwischen dem Verzahnungsbereich (17, 18) des Planeten (4) und der Drehmomentstütze (8) eine Spannkraft erzeugbar ist, durch welche die Verzahnungen axial gegeneinander gedrückt werden.

3. Exzentergetriebe nach Anspruch 2,
dadurch **gekennzeichnet**,
daß die Justiereinrichtung einen Federmechanismus aufweist, der die Spannkraft in axialer Richtung ausübt.

4. Exzentergetriebe nach Anspruch 1,
dadurch **gekennzeichnet**,
daß die Justiereinrichtung eine auswechselbare Distanzscheibe (9) aufweist, durch welche der axiale Abstand der Drehmomentstütze (8) relativ zu dem Verzahnungsbereich (17) des Planeten (4) einstellbar ist.

5. Exzentergetriebe, insbesondere nach einem der vorhergehenden Ansprüche, mit
- einer um eine Drehachse (15) drehbaren Antriebswelle (3),
- einem von der Antriebswelle (3) angetriebenen Planeten (4), der mindestens einen Verzahnungsbereich (17, 18) aufweist, wobei der Planet (4) auf einem Exzenterabschnitt der Antriebswelle (3) drehbar um eine Exzenterachse (14) gelagert ist, die zur Drehachse (15) der Antriebswelle (3) exzentrisch angeordnet ist,
- einer Drehmomentstütze (8), mit der ein Verzahnungsbereich (17) des Planeten (4) kämmt, und
- einem Abtrieb (5), der von dem Planeten (4) angetrieben ist,
dadurch **gekennzeichnet**,
daß der Verzahnungsbereich (17, 18) an dem Planeten (4) und die Drehmomentstütze (8) jeweils eine Verzahnung aufweisen, die axial zu beiden Seiten einer Mittenebene (30) des Planeten (4) ausgebildet sind, wobei die Mittenebene (30) durch die axiale Mitte des Planeten (4) und senkrecht zu der Drehachse (15) verläuft.

6. Exzentergetriebe nach einem der Ansprüche 1 bis 5,
dadurch **gekennzeichnet**,
daß an dem Planeten (4) zwei Verzahnungsbereiche (17, 18) vorgesehen sind,
daß ein erster Verzahnungsbereich (17) des Planeten (4) mit der Drehmomentstütze (8) kämmt und
daß ein zweiter Verzahnungsbereich (18) des Planeten (4) mit einer Verzahnung an dem Abtrieb (5) kämmt.

7. Exzentergetriebe nach einem der Ansprüche 1 bis 6,
dadurch **gekennzeichnet**,
daß die Antriebswelle (3) als eine Hohlwelle ausgebildet ist, in welcher der Planet (4) gelagert ist,
daß der Planet (4) axial länger ausgebildet ist als die Antriebswelle (3), wobei beide freien Enden des Planeten (4) gegenüber der Antriebswelle (3) axial hervorstehen,
daß der Planet (4) hülsenförmig ausgebildet ist und
daß an einer Innenseite des Planeten (4) eine Innenverzahnung vorgesehen ist.

8. Exzentergetriebe nach einem der Ansprüche 1 bis 7,
dadurch **gekennzeichnet**,
daß einer der beiden Verzahnungsbereiche (17, 18) als Innenverzahnung ausgebildet ist, während der andere der beiden Verzahnungsbereiche (17, 18) als Außenverzahnung ausgebildet ist.

9. Exzentergetriebe nach einem der Ansprüche 1 bis 8,
dadurch **gekennzeichnet**,
daß der Exzenter (6) als ein Ringelement ausgebildet ist, welches relativ zu der Antriebswelle (3) drehbar um die Drehachse (15) gelagert ist und daß eine Übertragungseinrichtung (34) vorgesehen ist, durch welche ein Drehmoment von der Antriebswelle (3) auf das Ringelement übertragbar ist.

10. Exzentergetriebe nach Anspruch 9,
dadurch **gekennzeichnet**,
daß die Übertragungseinrichtung (34) mindestens ein Zahnrad (31) aufweist, welches mit einer Verzahnung der Antriebswelle (3) in kämmender Verbindung steht.

11. Exzentergetriebe nach Anspruch 5,
dadurch **gekennzeichnet**,
daß eine Übertragungseinrichtung (34) einen ringförmigen Körper mit speichenartig angeordneten Übertragungsgliedern aufweist,
daß der ringförmige Körper auf einem zu der Drehachse (15) exzentrisch ausgebildeten Zylinderabschnitt der Antriebswelle (3) drehbar gelagert ist und
daß die speichenartig angeordneten Übertragungsglieder durch Durchbrüche in dem Gehäuse (1) oder den Abtrieb (5) hindurchragen und eine Exzenterbewegung auf den Planeten (4) übertragen.

12. Exzentergetriebe, insbesondere nach einem der vorhergehenden Ansprüche, mit
- einer um eine Drehachse (15) drehbaren Antriebswelle (3),
- einem von der Antriebswelle (3) angetriebenen Planeten (4), der mindestens einen Verzahnungsbereich (17, 18) aufweist, wobei der Planet (4) auf einem Exzenterabschnitt der Antriebswelle (3) drehbar um eine Exzenterachse (14) gelagert ist, die zur Drehachse (15) der Antriebswelle (3) exzentrisch angeordnet ist,
- einer Drehmomentstütze (8), mit der ein Verzahnungsbereich (17) des Planeten (4) kämmt, und
- einem Abtrieb (5), der von dem Planeten (4) angetrieben ist,
dadurch **gekennzeichnet**,
daß neben dem einen Planeten (4) ein zweiter Planet (40) vorgesehen ist, der drehbar um eine zweite Exzenterachse (41) angeordnet ist, welche parallel zu der ersten Exzenterachse (14) und um 180 Grad versetzt um die Drehachse (15) angeordnet ist, und
daß der zweite Planet (40) ebenfalls mit der Drehmomentstütze (8) kämmt und den Abtrieb antreibt.

13. Exzentergetrieben nac Anspruch 12,
dadurch **gekennzeichnet,**
daß der zweite Planet (40) als ein Satellit auf dem ersten Planeten (4) drehbar gelagert ist.
